# FASCICULE DE BREVET EUROPEEN

(11) **EP 4 417 950 B1**
(45) Date de publication et mention de la délivrance du brevet: **02.04.2025**
(21) Numéro de dépôt: 24156624.9
(22) Date de dépôt: 08.02.2024
(51) Int. Cl.: G01L 9/00, G01L 15/00, G01L 19/14, G01M 15/02, G01M 15/14, F01D 17/08, F02K 1/64, G01L 23/08, G01L 23/24, F02K 1/68, F02K 1/72, F02K 1/76

(54) **RÂTEAU DE MESURE DE PRESSION COMPORTANT UN BORD D ATTAQUE RAPPORTÉ**
DRUCKMESSRECHEN MIT AUFGESETZTER VORDERKANTE
PRESSURE MEASURING RAKE WITH ATTACHED LEADING EDGE

(30) Priorité: 17.02.2023 FR 2301496
(43) Date de publication de la demande: 21.08.2024
(73) Titulaire: AIRBUS OPERATIONS (S.A.S.), 31060 Toulouse (FR); Airbus (S.A.S.), 31700 Blagnac (FR)
(72) Inventeur: DAJEAN, Cyrille, 31060 TOULOUSE Cedex 9 (FR); JEAN, Nicolas, 31060 TOULOUSE Cedex 9 (FR); DUPE, Nicolas, 31060 TOULOUSE Cedex 9 (FR); MELONI, Christian, 31700 BLAGNAC (FR)
(74) Mandataire: Airbus-OPS SAS

(56) Documents cités:
- EP-A1- 3 671 166
- FR-A1- 3 065 806
- FR-A1- 3 079 613
- US-A1- 2019 323 909

## Description

### Domaine technique

La présente invention concerne un râteau de mesure de pression, en particulier pour un moteur d'un aéronef, et plus particulièrement pour un turboréacteur à double flux.

### Etat de la technique

Lors de certaines phases de conception ou de maintenance d'un aéronef, les moteurs dudit aéronef, notamment des turboréacteurs, sont susceptibles d'être testés. Ces tests nécessitent des prises de mesures, au sol et/ou en vol, en différents endroits du moteur que l'on souhaite tester. Ces prises de mesures impliquent une instrumentation du moteur, en particulier au niveau de l'intérieur d'une veine secondaire. Pour cela, on connaît des outils de mesure prévus pour être installés dans un moteur à tester, notamment pour mesurer des pressions.

Cependant, ces outils de mesure sont souvent difficiles et long à assembler et à mettre place ce qui peut rendre les phases de test laborieuses et coûteuses.

On connaît par le document FR 3 090 102 A1, un outil de mesure permettant de réaliser des mesures de pression dans un moteur d'aéronef. Cependant, l'outil de mesure divulgué présente une conception qui n'est pas optimale. En effet, il est prévu pour être assemblé par collage ce qui empêche un démontage, par exemple pour remplacer ou repositionner des composants. De plus, l'injection de colle ou de résine est difficile à maîtriser, notamment en termes de dosage. Un trop plein peut obturer des cavités tandis qu'un trop peu est susceptible de créer des fuites, ces évènements pouvant alors gêner les prises de mesures. Les documents de brevet FR 3 079 613 A1, FR 3 065 806 A1 et US 2019/323909 A1 divulguent d'autres exemples de râteaux de mesure de pression pour les moteurs aéronefs.

Les outils de mesure existants ne sont donc pas complètement satisfaisants.

### Exposé de l'invention

La présente invention a pour objet de remédier aux inconvénients précités. Elle concerne un râteau de mesure de pression, en particulier pour un moteur d'un aéronef, et plus particulièrement pour un turboréacteur à double flux.

Selon l'invention, le râteau de mesure, destiné à être agencé sur une bielle, comporte au moins :
- un fourreau comprenant une face avant et deux parois latérales délimitant, entre elles, un logement destiné à recevoir la bielle ;
- un circuit électronique agencé sur la face avant du fourreau et comprenant au moins un capteur ; et
- un bord d'attaque rapporté fixé de façon amovible sur le fourreau, ledit bord d'attaque rapporté comprenant une face interne agencée sur la face avant du fourreau de manière à recouvrir le circuit électronique, une face externe opposée à ladite face interne, et une pluralité de prises d'air réparties sur une longueur du bord d'attaque rapporté, chacune desdites prises d'air formant un passage fluidique entre la face externe et la face interne du bord d'attaque rapporté débouchant sur le circuit électronique par ladite face interne, en regard d'au moins un capteur du circuit électronique.

Ainsi, grâce au râteau de mesure, on dispose d'un outil de mesure qui est particulièrement simple et rapide à assembler, le bord d'attaque rapporté amovible permettant, notamment, de pouvoir accéder facilement au circuit électronique, par exemple pour changer ou réparer un capteur défectueux, et permettant également d'éviter un assemblage par collage et donc des problèmes qui y sont liés, par exemple des obturations d'orifices ou des fuites d'air.

De préférence, le râteau de mesure comporte, de plus, au moins un joint agencé, de façon amovible, entre la face interne du bord d'attaque rapporté et la face avant du fourreau ; ledit joint étant plaqué contre le circuit électronique en le recouvrant, au moins partiellement.

De façon avantageuse, le joint comporte au moins une ouverture traversante en regard d'au moins un capteur du circuit électronique ; chacune desdites ouvertures formant, entre le circuit électronique et la face interne du bord d'attaque rapporté, une cavité hermétiquement isolée d'une autre cavité ; chaque cavité comprenant au moins un capteur ; chaque prise d'air du bord d'attaque rapporté communiquant de façon exclusive avec une cavité.

Par ailleurs, dans un mode de réalisation préféré, le bord d'attaque rapporté comporte au moins un embout de mesure agencé sur la face externe dudit bord d'attaque rapporté dans le prolongement de chaque prise d'air ; chaque embout de mesure présentant une forme cylindrique apte à canaliser un flux d'air incident à ladite face externe dans sa prise d'air respective.

Avantageusement, le bord d'attaque rapporté comporte, sur la face externe, au moins un trou taraudé par lequel débouche au moins une prise d'air ; chaque embout de mesure correspondant à une pièce rapportée vissée dans un trou taraudé.

En outre, le râteau de mesure comporte au moins un élément de fixation pour fixer le bord d'attaque rapporté sur le fourreau.

Dans un mode de réalisation particulier, le râteau de mesure comporte, de plus, au moins une contre-plaque agencée sur une face arrière du fourreau opposée à la face avant ; ladite contre-plaque étant pourvue, sur sa longueur, d'une pluralité de trous de passage permettant le passage des éléments de fixation depuis l'intérieur du fourreau ; lesdits éléments de fixation traversant au moins la contre-plaque, le fourreau, le joint et le circuit électronique pour atteindre le bord d'attaque rapporté de manière à fixer ledit bord d'attaque rapporté au fourreau.

De plus, le râteau de mesure comporte au moins une unité de traitement de données apte à recevoir des données mesurées par les capteurs du circuit électronique, ladite unité de traitement de données étant intégrée dans le fourreau ou déportée.

L'invention concerne également un moteur d'un aéronef. Selon l'invention, le moteur comporte une veine secondaire et au moins une porte d'inversion mobile ; ladite porte d'inversion comprenant au moins une bielle fixée articulée entre la porte d'inversion et une motorisation ; ladite bielle étant configurée pour permettre d'amener la porte d'inversion dans une position escamotée dans laquelle elle n'est pas en travers de la veine secondaire et dans une position déployée dans laquelle est en travers de la veine secondaire, ledit moteur comportant au moins un râteau de mesure tel que décrit ci-dessus agencé sur au moins une bielle du moteur ; ladite ou lesdites bielle étant chacune logée dans le logement d'au moins un râteau de mesure.

L'invention concerne également un aéronef comportant au moins un moteur tel que décrit ci-dessus.

### Brève description des figures

Les figures annexées feront bien comprendre comment l'invention peut être réalisée. Sur ces figures, des références identiques désignent des éléments semblables.
La figure 1 est une vue de côté d'un aéronef selon l'invention.
La figure 2 est une vue de côté, en coupe, d'un moteur selon l'invention comprenant des portes d'inversion dans une position escamotée.
La figure 3 est une vue de côté, en coupe, d'un moteur selon l'invention comprenant des portes d'inversion dans une position déployée.
La figure 4 est une vue de côté d'un râteau de mesure selon un mode de réalisation particulier de l'invention.
La figure 5 est une vue éclatée du râteau de mesure de la figure 4.
La figure 6 est une vue en coupe selon un plan de coupe A-A du râteau de mesure de la figure 4.

### Description détaillée

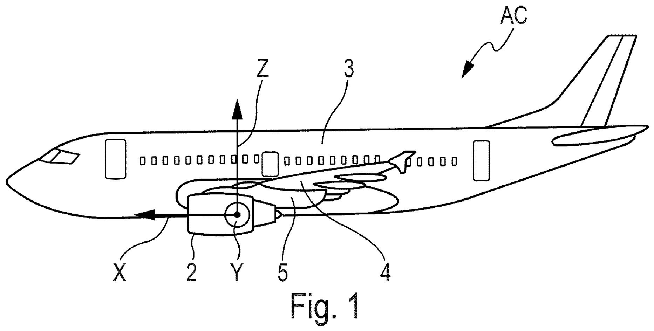

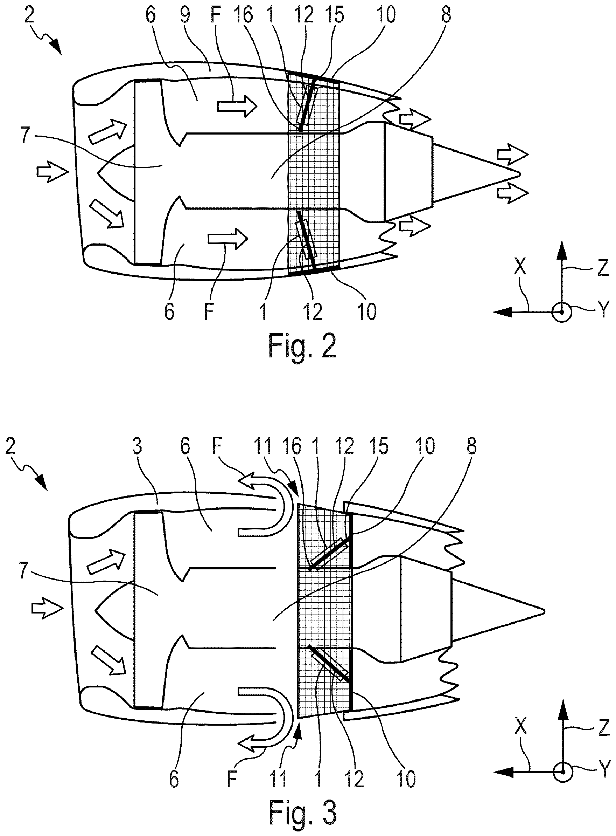

Le râteau de mesure de pression 1 (ci-après râteau de mesure 1), permettant d'illustrer l'invention, est représenté dans des modes de réalisation particuliers de la figure 2 à la figure 6. Il correspond à un outil de mesure permettant de réaliser des mesures aérodynamiques, notamment des mesures de pression. Bien que non exclusivement, le râteau de mesure 1 est particulièrement adapté pour être utilisé sur un aéronef AC, représenté sur la figure 1. Il permet de réaliser des mesures dans le cadre de tests au sol et/ou en vol. De préférence, le râteau de mesure 1 est agencé dans une veine d'un moteur 2 de l'aéronef AC, comme représenté sur la figure 2 et la figure 3.

L'aéronef AC comporte un fuselage 3 de chaque côté duquel est fixée une aile 4 portant un moteur 2 fixé à un mât 5 situé sous ladite aile 4. Dans le mode de réalisation préféré qui est décrit dans la présente description, le moteur 2 correspond à un turboréacteur double flux et le râteau de mesure 1 est configuré pour réaliser des mesures de pression dans une veine secondaire 6 dudit moteur 2. Toutefois, l'invention n'est pas limitée à un tel moteur et le râteau de mesure 1 peut être utilisé dans un grand nombre de situations différentes et variées dans lesquelles la pression d'un flux d'air doit être mesurée.

Dans ce qui suit, on fera référence à un repère (X, Y, Z) orthogonal tel que :
- X est l'axe longitudinal du moteur 2 qui est parallèle à l'axe longitudinal de l'aéronef AC et orienté positivement vers l'avant dudit aéronef AC ;
- Y est l'axe transversal au moteur et perpendiculaire à l'axe X ; et
- Z est l'axe perpendiculaire à l'axe X et à l'axe Y.

Comme représenté sur la figure 2 et la figure 3, le moteur 2 comporte une soufflante 7, une motorisation 8 formant un noyau, et une nacelle 9 disposée autour de la motorisation 8. La veine secondaire 6 est délimitée entre la motorisation 8 et la nacelle 9. L'air pénètre par la soufflante 7 puis il est divisé en un flux primaire qui traverse la motorisation 8 et en un flux secondaire qui traverse la veine secondaire 6, comme représenté par des flèches F sur la figure 2 et la figure 3.

Le moteur 2 comporte également un système d'inversion de poussée qui comprend des portes à inversion 10. Ces portes à inversion 10 sont montées mobiles en rotation autour d'un axe sensiblement perpendiculaire à l'axe X, soit parallèle à l'axe Y. Elles peuvent être amenées dans une position escamotée (figure 2), correspondant à une configuration où le moteur 2 est en mode poussée, et dans une position déployée (figure 3), correspondant à une configuration où le moteur 2 est en mode contre-poussée. Dans la position escamotée, les portes à inversion 10 sont comprises dans les parois de la nacelle 9, elles ne sont pas en travers de la veine secondaire 6, et elles ne font donc pas obstacle au passage du flux d'air secondaire. Dans la position déployée, les portes à inversion 10 s'étendent de la motorisation 8 aux parois de la nacelle 9, elles sont en travers de la veine secondaire 6, et elles font donc obstacle au passage du flux d'air secondaire. De plus, dans cette position déployée, les portes à inversion 10 ouvrent des fenêtres 11 qui communiquent avec l'extérieur de la nacelle 9 et permettent au flux d'air secondaire d'être dévié par lesdites fenêtres 11.

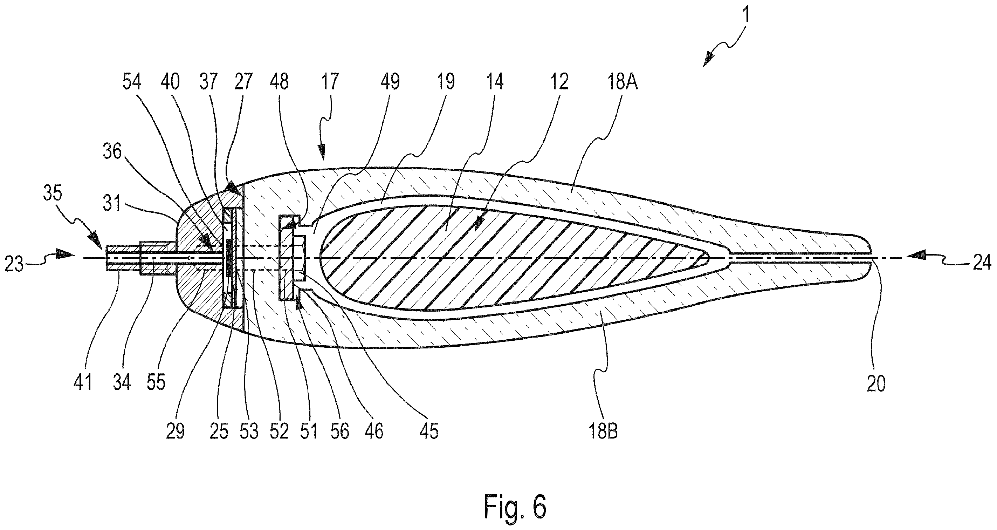

En outre, le moteur 2 comporte une bielle 12 agencée sur chaque porte à inversion 10. Chaque bielle 12 comprend un corps 14 (figure 6) pourvu d'une forme allongée s'étendant entre la motorisation 8 et la porte à inversion 10 sur laquelle elle est agencée. De plus, une extrémité longitudinale 15 de chaque bielle 12 est fixée de manière articulée à la porte à inversion 10 et une autre extrémité longitudinale 16 de chaque bielle 12 est fixée de manière articulée à la motorisation 8. De plus, le corps 14 de chaque bielle 12 présente une section aérodynamique autour de laquelle s'écoule le flux d'air secondaire de la veine secondaire 6.

Le moteur 2 comporte également des éléments de déplacement usuels (vérins, glissières, ...) permettant d'amener les portes à inversion 10 dans la position escamotée et dans la position déployée par l'intermédiaire des bielles 12.

Dans la position déployée, les bielles 12 sont en travers de la veine secondaire 6, à savoir elles sont orientées de sorte que leur direction longitudinale soit sensiblement incidente au flux d'air secondaire. A l'inverse, dans la position escamotée, les bielles 12 ne sont pas en travers de la veine secondaire 6, à savoir elles sont orientées de sorte que leur direction longitudinale soit sensiblement dans la direction du flux d'air secondaire.

Dans le mode de réalisation préféré, représenté de la figure 2 à la figure 6, le râteau de mesure 1 est configuré pour permettre de réaliser des mesures de pression du flux d'air secondaire dans la veine secondaire 6, en particulier lorsque la porte d'inversion 10 est dans la position escamotée. Dans ce mode de réalisation, le râteau de mesure 1 est agencé sur une bielle 12 du moteur 2, toutefois, dans d'autres modes de réalisation, il peut être configuré pour être agencé sur un autre élément du moteur 2 ou de l'aéronef AC.

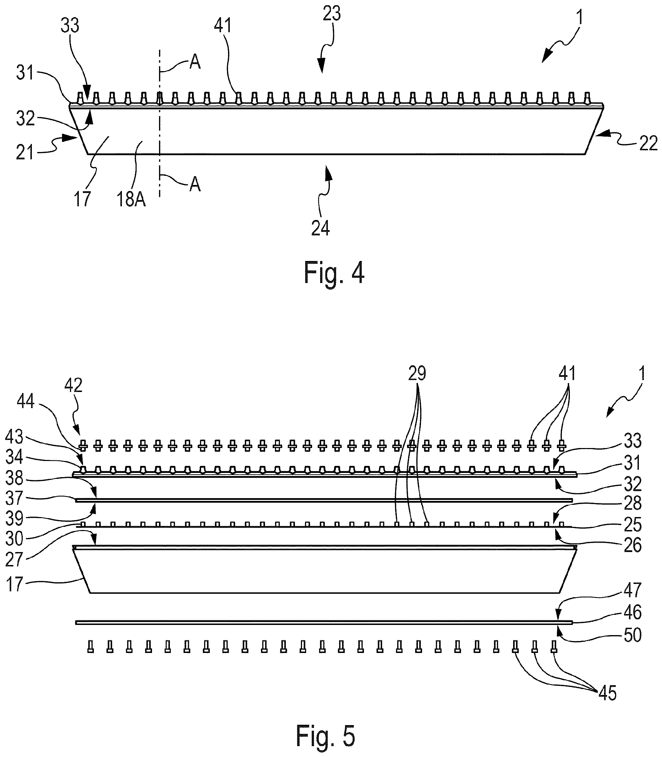

Le râteau de mesure 1, représenté de la figure 4 à la figure 6, est un outil de mesure comprenant différents éléments amovibles qui peuvent être montés et démontés. En effet, on entend par élément « amovible », un élément qui est fixé à un assemblage de sorte qu'il puisse être séparé de l'assemblage et remonté par la suite, et ce, à volonté et sans endommager l'assemblage. Comme illustré sur la vue éclatée de la figure 5, le râteau de mesure 1 est configuré de sorte que les différents éléments qui le composent sont assemblés et fixés ensemble « en sandwich ». Cet assemblage est décrit plus en détail dans la suite de la description.

Le râteau de mesure 1 comporte, notamment, un fourreau 17 qui est disposé et fixé sur le corps 14 de la bielle 12 que l'on souhaite instrumenter. Ce fourreau 17 présente une forme allongée et un profil aérodynamique, par exemple un profil biconvexe. De préférence, le fourreau 17 est réalisé par impression en trois dimensions dans un matériau de type polymère, par exemple en polyamide.

Le râteau de mesure 1 présente une longueur apte à couvrir, au moins en partie, la totalité de la bielle 12. A titre non limitatif, dans l'exemple considéré d'une application à un moteur d'aéronef, le râteau de mesure 1 présente typiquement une longueur comprise entre 50 cm et 1 m, en particulier une longueur de 80 cm.

Comme représenté en vue de coupe sur la figure 6, le fourreau 17 comprend deux parois latérales 18A et 18B délimitant, entre elles, un logement 19 configuré pour recevoir le corps 14 de la bielle 12. De plus, le logement 19 communique avec l'extérieur du fourreau 17 par une fente 20 qui s'étend sur la longueur du fourreau 17 entre les parois latérales 18A et 18B. Celles-ci forment ainsi une pince permettant d'enserrer le corps 14 de la bielle 12. En outre, le fourreau 17 est ouvert à des extrémités longitudinales 21 et 22, ce qui permet aux extrémités longitudinales 15 et 16 de la bielle 12 de dépasser dudit fourreau 17 afin d'être fixées, respectivement, à la motorisation 8 et à la porte d'inversion 10.

La fente 20 est plus étroite que l'épaisseur du corps 14 de la bielle 12 et l'introduction de ladite bielle 12 nécessite donc un écartement élastique des parois latérales 18A et 18B pour la mise en place du râteau de mesure 1 sur la bielle 12. Un resserrement élastique des parois latérales 18A et 18B sur le corps 14 de la bielle 12, lorsque celui-ci est dans le logement 19, permet de maintenir en place le râteau de mesure 1 sans qu'il soit nécessaire de prévoir des éléments complémentaires. Le corps 14 peut, cependant, comporter des formes ou des éléments (non représentés) pour faciliter la mise en position du râteau de mesure 1 et/ou pour empêcher le déplacement du fourreau 17 le long de la bielle 12.

Dans une réalisation particulière, les parois latérales 18A et 18B peuvent être maintenues serrées entre elles sur le corps 14 de la bielle 12 par l'intermédiaire d'une fixation amovible (non représentées). Par exemple, elles peuvent être vissées, boulonnées, collées ou serrées par un collier de serrage.

Le fourreau 17 présente, lorsqu'il est en place sur la bielle 12 dans la veine secondaire 6, un bord d'attaque 23 orienté vers l'avant (positivement selon l'axe X) et un bord de fuite 24 orienté vers l'arrière (négativement selon l'axe X) par rapport à l'écoulement de l'air dans la veine secondaire 6. De préférence, le fourreau 17 est configuré de sorte que la fente 20 est située au bord de fuite 24.

Par ailleurs, comme illustré sur la figure 5 et la figure 6, le râteau de mesure 1 comporte un circuit électronique 25 agencé de façon amovible sur le fourreau 17. Ce circuit électronique 25 est, notamment, pourvu d'une face 26 agencée sur une face avant 27 du fourreau 17. La face avant 27 correspond à une surface située du côté du bord d'attaque 23 qui s'étend sur la longueur dudit fourreau 17. Le circuit électronique 25 est également pourvu d'une face 28, opposée à la face 26 et donc orientée vers le bord d'attaque 23, sur laquelle est agencée une pluralité de capteurs 29 de pression.

De préférence, le circuit électronique 25 correspond à un circuit imprimé présentant une forme allongée et il est agencé sur toute la longueur de la face avant 27. Cependant, dans des modes de réalisation particuliers, il peut s'agir d'un autre type de circuit électronique s'étendant sur toute ou partie de la face avant 27. De plus, les capteurs 29 sont répartis de manière à former une ligne s'étendant sur la longueur du circuit électronique 25.

Le circuit électronique 25 comprend également un bus de données permettant des communications de données entrantes et/ou sortantes avec les capteurs 29 ainsi qu'une alimentation électrique. Dans le mode de réalisation préféré de la présente description, les capteurs 29 sont configurés pour mesurer des valeurs de pressions générées par le flux d'air secondaire de la veine secondaire 6, comme précisé ci-après dans la description.

De préférence, les capteurs 29 correspondent à des capteurs de pression de type microsystème électromécanique (aussi appelés MEMS pour « MicroElectroMechanical Systems » en anglais). Toutefois, il peut s'agir de capteurs d'un autre type aptes à réaliser des mesures de pression. A titre d'exemple, non limitatif, les capteurs « MEMS », particulièrement compacts, permettent d'obtenir une ligne de capteurs 29 le long du circuit électronique 25 avec une densité de cinquante capteurs par mètre ce qui représente un capteur tous les 20 mm. Selon les applications et/ou la précision de mesure que l'on souhaite obtenir, la densité de capteurs peut varier, par exemple avec une distance entre deux capteurs 29 comprise entre 10 mm et 100 mm.

En outre, le râteau de mesure 1 comporte une unité de traitement données 30, représentée schématiquement sur la figure 5. L'unité de traitement de données 30 est connectée au circuit électronique 25 de manière à pouvoir recevoir des données mesurées par les capteurs 29 dudit circuit électronique 25. De façon non limitative, l'unité de traitement de données 30 peut être configurée pour assurer une fonction d'acquisition et de transmission des données mesurées par les capteurs 29 et/ou une fonction d'enregistrement, par exemple dans une mémoire (non représentée). Dans un mode de réalisation particulier, l'unité de traitement de données 30 est intégrée directement sur le râteau de mesure 1, par exemple dans une partie du fourreau 17. Dans d'autres modes de réalisation, l'unité de traitement de données 30 peut être déportée ailleurs. Par exemple, elle peut être agencée sur une partie du moteur 2, sur ou sous la porte d'inversion 10.

Dans un de ces modes de réalisation, le râteau de mesure 1 peut comporter un pied (non représenté sur les figures) agencé à une extrémité du fourreau 17. Le pied présente une forme plane. Le pied est configuré pour protéger l'unité de traitement de données 30 dans le cas où celle-ci est agencée sur le râteau de mesure 1. Le pied est apte à être plaqué contre la porte d'inversion 10 de manière à recouvrir l'unité de traitement de données 30 pour la protéger du milieu extérieur.

Comme représenté de la figure 4 à la figure 6, le râteau de mesure 1 comporte, également, un bord d'attaque rapporté 31 fixé sur la face avant 27 du fourreau 17. Il s'agit d'une pièce monobloc amovible qui couvre l'ensemble de la face avant 27. Il peut être réalisé par usinage dans un matériau métallique, de préférence en aluminium.

Le bord d'attaque rapporté 31 comprend une face interne 32 agencée sur la face avant 27 du fourreau 17 de manière à recouvrir le circuit électronique 25. Il comprend également une face externe 33 opposée à ladite face interne 32. Comme illustré sur la figure 5, la face externe 33 est située vers le bord d'attaque 23 du fourreau 17 et elle présente une forme arrondie prévue pour être incidente au flux d'air secondaire.

Le bord d'attaque 31 comporte, en outre, une pluralité de prises d'air 34 réparties sur la longueur dudit bord d'attaque rapporté 31. Dans l'exemple illustré sur la figure 4 et la figure 5, les prises d'air 34 sont réparties à intervalles réguliers, c'est-à-dire à une même distance l'une de l'autre. Toutefois, elles peuvent également être réparties à intervalles irréguliers. Chaque prise d'air 34 forme un passage fluidique entre la face externe 33 et la face interne 32. Ces prises d'air 34 présentent une extrémité 35 débouchant par la face externe 33 dans la veine secondaire 6 et une extrémité 36 débouchant par la face interne 32 sur le circuit électronique 25. En particulier, chaque prise d'air 34 débouche par l'extrémité 36 en regard d'un capteur 29 du circuit électronique 25.

Le bord d'attaque rapporté 31 ainsi configuré permet à chaque capteur 29 de mesurer une pression du flux d'air de la veine secondaire 6 canalisé par une prise d'air 34 particulière. Cependant, dans des modes de réalisation particuliers, chaque prise d'air 34 peut déboucher en regard d'une pluralité de capteur 29 de manière à réaliser plusieurs mesures liées à un flux d'air canalisé par une prise d'air 34.

Ainsi, grâce au râteau de mesure 1, on dispose d'un outil de mesure de pression qui est particulièrement simple et rapide à assembler. Le bord d'attaque rapporté 31 amovible permet notamment de pouvoir accéder facilement au circuit électronique 25, par exemple pour changer ou réparer un capteur 29 défectueux. De plus, le râteau de mesure 1 présente une configuration qui permet d'éviter un assemblage par collage et donc les problèmes qui y sont liés, par exemple des obturations d'orifices ou des fuites d'air.

Par ailleurs, comme représenté de la figure 4 à la figure 6, le râteau de mesure 1 comporte un joint 37 agencé, de façon amovible, entre le bord d'attaque rapporté 31 et le fourreau 17. Plus particulièrement, le joint 37 comprend une face 38 agencée contre la face interne 32 du bord d'attaque rapporté 31 et une face 39 agencée contre la face 28 du circuit électronique 25. Le bord d'attaque rapporté 31 est fixé sur le fourreau 17 de manière à plaquer le joint 37 contre la face 28 du circuit électronique 25. De plus, le joint 37 présente une forme rectangulaire allongée similaire à celle du circuit électronique 25 sur lequel il repose. De préférence, le joint 37 présente la même largeur que le circuit électronique 25 de manière à recouvrir toute la face 28. Par exemple, le joint 37 présente une largeur d'environ 6 mm.

La forme du joint 37 assure, à l'interface entre la face interne 32 et la face avant 27, une étanchéité permettant d'isoler les capteurs 29 du milieu extérieur, à savoir de la veine secondaire 6 dans laquelle ledit râteau de mesure 1 est installé. Bien que le joint 37 réalise une étanchéité au niveau de l'interface entre la face interne 32 et la face avant 27, il permet, toutefois, une communication fluidique entre le milieu extérieur et les capteurs 29 par les prises d'air 34. Cette communication fluidique permet au flux d'air de la veine secondaire 6 incident de pénétrer dans les prises d'air 34 de sorte que les capteurs 29 puissent mesurer des valeurs de pression dudit flux d'air.

Le joint 37 correspond à un joint plat réalisé dans un matériau étanche usuel, de préférence il s'agit d'un joint en silicone.

Dans des modes de réalisation particuliers, le râteau de mesure 1 peut comporter une pluralité de joints 37 recouvrant tout ou une partie du circuit électronique 25.

En outre, comme représenté sur la figure 6, le joint 37 comporte une pluralité d'ouvertures 40 réparties sur sa longueur. Les ouvertures 40 s'étendent de manière traversante entre les faces 38 et 39 du joint 37. Chaque ouverture 40 est pratiquée en regard de chaque capteur 29 du circuit électronique 25 formant ainsi des cavités comprenant chacun desdits capteurs 29. Ces cavités sont fermées, d'un côté, par la face interne 32 du bord d'attaque rapporté 31 et, de l'autre côté, par la face 28 du circuit électronique 25. Les ouvertures 40 forment alors des cavités hermétiquement isolées les unes des autres.

De plus, chaque prise d'air 34 du bord d'attaque rapporté 31 débouche dans une des cavités formées par les ouvertures 40. De cette manière, chaque capteur 29 est situé dans une cavité hermétique qui communique avec l'extérieur par une des prises d'air 34.

De manière non limitative, les ouvertures 40 peuvent présenter une section de forme rectangulaire, par exemple une section de 6 mm sur 4 mm. Les ouvertures 40 sont réalisées, de préférence, par découpe laser.

Le joint 37 ainsi configuré permet d'obtenir des mesures de pression précises en réduisant les risques de fuites ou d'une quelconque obturation des prises d'air 34. Il permet, notamment, d'obtenir des mesures de pression pour chaque capteur 29 qui sont parfaitement indépendantes les unes des autres.

En outre, comme représenté de la figure 4 à la figure 6, le râteau de mesure 1 comporte des embouts de mesure 41 agencés sur la face externe 33 du bord d'attaque rapporté 31. Chaque embout de mesure 41 est situé dans le prolongement d'une prise d'air 34. Ils présentent une forme cylindrique creuse, faisant saillie vers le bord d'attaque 23, et ils sont pourvus d'une extrémité 42 par laquelle pénètre le flux d'air incident de la veine secondaire 6. Chaque embout de mesure 41 est configuré pour canaliser le flux d'air de la veine secondaire 6 dans une prise d'air 34.

Les embouts de mesure 41 correspondent à des embouts usuels de type tube de Pitot. De préférence, il s'agit d'embouts de types sonde de Kiel adaptés à réaliser des mesures de pression totale. En particulier, les embouts de type sonde de Kiel permettent d'obtenir des mesures précises, à 1% près, pour des angles de lacet et/ou de tangage dudit embout de mesure 41 jusqu'à 64° (par rapport à la direction du flux d'air).

Par ailleurs, les embouts de mesure 41 sont réalisés en matériau métallique. De préférence, ils sont réalisés en acier inoxydable par impression en trois dimensions.

Dans un mode de réalisation particulier, représenté de la figure 4 à la figure 6, les embouts de mesure 41 correspondent à des pièces rapportées qui sont fixées, de façon amovible, sur le bord d'attaque rapporté 31. Pour ce faire, le bord d'attaque rapporté 31 est pourvu, sur sa face externe 33, de trous taraudés 43. Ces derniers sont situés sur la face externe 33 de sorte qu'une prise d'air 34 débouche dans chacun d'eux. De plus, les embouts de mesure 41 comportent chacun une extrémité filetée 44, opposée à l'extrémité 42, qui est configurée pour être vissée dans les trous taraudés 43.

Ainsi, il est possible de changer facilement les embouts de mesure 41, par exemple pour remplacer un embout défectueux ou pour modifier le type d'embout avec lequel on souhaite réaliser des mesures.

Par ailleurs, un joint plat (non représenté) peut être agencé entre l'embout de mesure 41 et le bord d'attaque rapporté 31 pour assure une étanchéité. En complément, ou en alternative, une colle de type « frein filet » peut être appliquée sur l'extrémité filetée 44 afin d'améliorer la fixation et/ou l'étanchéité.

En outre, le râteau de mesure 1 comporte des éléments de fixation aptes à fixer, de façon amovible, le bord d'attaque 31 sur le fourreau 17. De manière non limitative, ces éléments de fixations peuvent correspondre à des vis, des boulons ou des rivets.

Dans le mode de réalisation préféré, représenté de la figure 4 à la figure 6, le râteau de mesure 1 comporte une pluralité de vis 45 ainsi qu'une contre-plaque 46 permettant de fixer ensemble, de façon amovible, le fourreau 17, le circuit électronique 25, le joint 37 et le bord d'attaque 31, comme précisé ci-dessous.

La contre-plaque 46 correspond à une plaque rigide, de forme allongée, qui est apte à servir de support de fixation pour l'assemblage du râteau de mesure 1. Elle est agencée à l'intérieur du fourreau 17, dans le logement 19. De préférence, comme représenté sur la figure 6, la contre-plaque 46 est glissée dans une rainure 56 en forme de « T », ce qui la maintient mécaniquement dans le fourreau 17 et laisse un accès pour insérer les vis 45. Plus précisément, la contre-plaque 46 présente une face 47 agencée contre une face arrière 48 du fourreau 17. La face arrière 48 est située dans une travée 49 au fond du logement 19 parallèlement à la face avant 27. La contre-plaque 46 présente également une face 50 servant de face d'appui pour les têtes des vis 45.

De plus, comme représenté sur la figure 6, la contre-plaque 46, le fourreau 17, le circuit électronique 25 et le joint 37 sont tous percés, de part en part, par des trous permettant le passage des vis 45. La contre-plaque 46 comprend des trous de passage 51 pratiqués entre ses face 47 et 50. Le fourreau 17 comprend des trous 52 pratiqués entre sa face avant 27 et sa face arrière 48. Le circuit électronique 25 comprend des trous 53 pratiqués entre ses faces 26 et 28. Le joint comprend des trous 54 pratiqués entre ses faces 38 et 39.

En outre, le bord d'attaque rapporté 31 comprend des trous de fixation 55 pratiqués dans sa face interne 32. Ces trous de fixation 55 correspondent à des trous taraudés, borgnes à une extrémité et qui débouchent par la face interne 32 à l'autre extrémité.

La contre-plaque 46, le circuit électronique 25, le joint 37 et le bord d'attaque rapporté 31 sont agencés sur le fourreau 17 de sorte que les trous de passage 51, les trous 52, 53, 54 et les trous de fixation 55 soient alignés les uns avec les autres. Le fourreau 17 peut comporter des formes adaptées pour réaliser ou faciliter cet alignement. Les vis 45 sont agencées au travers des trous 51, 52, 53, 54 et 55 ainsi alignés de sorte que leurs têtes soient en appui contre la face 47 de la contre-plaque 46 et qu'elles soient vissées dans les trous de fixation 55 du bord d'attaque rapporté 31.

Le râteau de mesure 1 ainsi monté, comme représenté sur la figure 6, présente un assemblage en sandwich maintenu en position par les vis 45. Un tel assemblage permet d'assurer plusieurs fonctions :
- il permet de fixer le bord d'attaque rapporté 31 sur le fourreau 17 ;
- il permet de mettre en position les éléments assemblés en sandwich les uns par rapport grâce à l'alignement réalisé par l'intermédiaire des vis 45 ; et
- il permet de serrer ensemble les éléments assemblés en sandwich, notamment le joint 37 de sorte qu'il puisse assurer une étanchéité.

Dans une application préférée, le râteau de mesure 1 tel que décrit ci-dessus peut être assemblé et utilisé comme suit. Le circuit électronique 25 est placé sur la face avant 27 du fourreau 17. Le joint 37 est disposé par-dessus le circuit électronique 25 de manière à positionner chaque capteur 29 dudit circuit électronique 25 dans une des cavités formées par les ouvertures 40. Parallèlement, la contre-plaque 46 est agencée contre la face arrière 48 du fourreau 17 en étant glissée dans la travée 49 par l'une des extrémités 15 et 16 du corps 14 dudit fourreau 17. Les vis 45 sont amenées dans les trous de passage 51 de la contre-plaque 46 depuis le logement 19 du fourreau 17. Alors, les positions de la contre-plaque 46, du circuit électronique 25 et du joint 37 sont ajustées de sorte que les trous 51, 52, 53 et 54 s'alignent pour laisser traverser les vis 45. Le bord d'attaque rapporté 31 est ensuite amené sur la face avant 27 du fourreau 17, par-dessus le circuit électronique 25 et le joint 37. Les vis 45 sont finalement vissées dans les trous de fixation 55 du bord d'attaque rapporté 31 en passant un outil de vissage dans le logement 19. Ce faisant, les vis 45 exercent un effort sur le bord d'attaque rapporté 31 qui le plaque contre la face avant 27 du fourreau 17. Le circuit électronique 25, le joint 37 et le fourreau 17 sont alors serrés en sandwich entre la contre-plaque 46 et le bord d'attaque rapporté 31.

Une fois le râteau de mesure 1 assemblé, on peut réaliser des tests d'étanchéité pour vérifier que le joint 37 est bien positionné et qu'il n'y a pas de fuites. Bien que cet assemblage limite grandement le risque de fuite, si une telle fuite devait être identifiée lors des tests d'étanchéité, le joint 37 peut être repositionné par simple démontage du bord d'attaque rapporté 31.

Le râteau de mesure 1 ainsi assemblé et testé est apte à être positionné sur la bielle 12 du moteur 2 dans lequel on souhaite réaliser des mesures. En effet, un tel assemblage sans collage ne nécessite pas d'attendre le séchage de la colle pour réaliser des tests d'étanchéité et pour monter le râteau de mesure 1 sur la bielle 12.

Dans le cas où un disfonctionnement lié au circuit électronique 25 est détecté (ou simplement suspecté), le râteau de mesure 1 est retiré de la bielle 12 sur laquelle il est installé. Il est ensuite démonté en dévissant les vis 45 ce qui permet de déposer le bord d'attaque rapporté 31 et le joint 37 pour accéder au circuit électronique 25. Une identification et un remplacement du ou des capteurs 29 défectueux peuvent alors être réalisés, le cas échéant. Une fois cette opération terminée, le râteau de mesure 1 est remonté comme décrit précédemment et peut être utilisé de nouveau.

Le râteau de mesure 1 tel que décrit ci-dessus présente de nombreux avantages. En particulier :
- il présente une conception simple et peu onéreuse permettant un assemblage rapide ;
- il permet d'éviter un assemblage par collage et ainsi tous les problèmes inhérents, à savoir des obturations de passages et/ou des fuites, pouvant impacter les mesures ;
- il est assemblé de façon démontable ce qui permet un accès facilité au circuit électronique 25 ; et
- il permet de remplacer des éléments particuliers du râteau de mesure sans avoir besoin de remplacer ledit râteau de mesure 1 en entier, notamment de remplacer un ou plusieurs capteurs 29 défectueux.

## Revendications

1. Râteau de mesure destiné à être agencé sur une bielle (12), ledit râteau de mesure comprenant au moins :
- un fourreau (17) comprenant une face avant (27) et deux parois latérales (18A, 18B) délimitant, entre elles, un logement (19) destiné à recevoir la bielle (12) ;
- un circuit électronique (25) agencé sur la face avant (27) du fourreau (17) et comprenant au moins un capteur (29) ; et
- un bord d'attaque rapporté (31) fixé de façon amovible sur le fourreau (17), ledit bord d'attaque rapporté (31) comprenant une face interne (32) agencée sur la face avant (27) du fourreau (17) de manière à recouvrir le circuit électronique (25), une face externe (33) opposée à ladite face interne (32), et une pluralité de prises d'air (34) réparties sur une longueur du bord d'attaque rapporté (31), chacune desdites prises d'air (34) formant un passage fluidique entre la face externe (33) et la face interne (32) du bord d'attaque rapporté (31) débouchant sur le circuit électronique (25) par ladite face interne (32), en regard d'au moins un capteur (29) du circuit électronique (25).

2. Râteau de mesure selon la revendication 1,
**caractérisé en ce qu'**il comporte, de plus, au moins un joint (37) agencé, de façon amovible, entre la face interne (32) du bord d'attaque rapporté (31) et la face avant (27) du fourreau (17), ledit joint (37) étant plaqué contre le circuit électronique (25) en le recouvrant, au moins partiellement.

3. Râteau de mesure selon la revendication 2,
**caractérisé en ce que** le joint (37) comporte au moins une ouverture (40) traversante en regard d'au moins un capteur (29) du circuit électronique (25), chacune desdites ouvertures (40) formant, entre le circuit électronique (25) et la face interne (32) du bord d'attaque rapporté (31), une cavité hermétiquement isolée d'une autre cavité, chaque cavité comprenant au moins un capteur (29), chaque prise d'air (34) du bord d'attaque rapporté (31) communiquant de façon exclusive avec une cavité.

4. Râteau de mesure selon l'une quelconque des revendications 1 à 3,
**caractérisé en ce que** le bord d'attaque rapporté (31) comporte au moins un embout de mesure (41) agencé sur la face externe (33) dudit bord d'attaque rapporté (31) dans le prolongement de chaque prise d'air (34), chaque embout de mesure (41) présentant une forme cylindrique apte à canaliser un flux d'air incident à ladite face externe (33) dans sa prise d'air (34) respective.

5. Râteau de mesure selon la revendication 4,
**caractérisé en ce que** le bord d'attaque rapporté (31) comporte, sur la face externe (33), au moins un trou taraudé (43) par lequel débouche au moins une prise d'air (34), chaque embout de mesure (41) correspondant à une pièce rapportée vissée dans un trou taraudé (43).

6. Râteau de mesure selon l'une quelconque des revendications 1 à 5,
**caractérisé en ce qu'**il comporte au moins un élément de fixation pour fixer le bord d'attaque rapporté (31) sur le fourreau (17).

7. Râteau de mesure selon la revendication 6,
**caractérisé en ce qu'**il comporte, de plus, au moins une contre-plaque (46) agencée sur une face arrière (48) du fourreau (17) opposée à la face avant (27), ladite contre-plaque (46) étant pourvue, sur sa longueur, d'une pluralité de trous de passage (51) permettant le passage des éléments de fixation depuis l'intérieur du fourreau (17), lesdits éléments de fixation traversant au moins la contre-plaque (46), le fourreau (17), le joint (37) et le circuit électronique (25) pour atteindre le bord d'attaque rapporté (31) de manière à fixer ledit bord d'attaque rapporté (31) au fourreau (17).

8. Râteau de mesure selon l'une quelconque des revendications précédentes,
**caractérisé en ce qu'**il comporte au moins une unité de traitement de données (30) apte à recevoir des données mesurées par les capteurs (29) du circuit électronique (25), ladite unité de traitement données (30) étant intégrée dans le fourreau (17) ou déportée.

9. Moteur d'un aéronef, ledit moteur (2) comportant une veine secondaire (6) et au moins une porte d'inversion (10) mobile, ladite porte d'inversion (10) comprenant au moins une bielle (12) fixée articulée entre la porte d'inversion (10) et une motorisation (8), ladite bielle (12) étant configurée pour permettre d'amener la porte d'inversion (10) dans une position escamotée dans laquelle elle n'est pas en travers de la veine secondaire (6) et dans une position déployée dans laquelle est en travers de la veine secondaire (6),
**caractérisé en ce qu'**il comporte au moins un râteau de mesure (1) selon l'une quelconque des revendications 1 à 8, agencé sur au moins une bielle (12) du moteur (2), ladite ou lesdites bielle (12) étant chacune logée dans le logement (19) d'au moins un râteau de mesure (1).

10. Aéronef,
**caractérisé en ce qu'**il comporte au moins un moteur (2) selon la revendication 9.

## Patentansprüche

1. Messrechen, der dazu bestimmt ist, an einer Stange (12) eingerichtet zu sein, wobei der Messrechen mindestens Folgendes beinhaltet:
- eine Hülse (17), die eine Vorderseite (27) und zwei Seitenwände (18A, 18B) beinhaltet, die zwischen sich eine Aufnahme (19) begrenzen, die dazu bestimmt ist, die Stange (12) aufzunehmen;
- eine elektronische Schaltung (25), die an der Vorderseite (27) der Hülse (17) angeordnet ist und mindestens einen Sensor (29) beinhaltet; und
- eine aufgesetzte Vorderkante (31), die entfernbar an der Hülse (17) befestigt ist, wobei die aufgesetzte Vorderkante (31) eine Innenseite (32), die an der Vorderseite (27) der Hülse (17) so eingerichtet ist, dass sie die elektronische Schaltung (25) bedeckt, eine Außenseite (33), die zu der Innenseite (32) entgegengesetzt ist, und eine Vielzahl von Lufteinlässen (34), die über eine Länge der aufgesetzten Vorderkante (31) verteilt sind, beinhaltet, wobei jeder der Lufteinlässe (34) zwischen der Außenseite (33) und der Innenseite (32) der aufgesetzten Vorderkante (31) einen Fluiddurchgang bildet, der durch die Innenseite (32) an der elektronischen Schaltung (25) gegenüber mindestens einem Sensor (29) der elektronischen Schaltung (25) mündet.

2. Messrechen nach Anspruch 1,
**dadurch gekennzeichnet, dass** er ferner mindestens eine Dichtung (37) umfasst, die entfernbar zwischen der Innenseite (32) der aufgesetzten Vorderkante (31) und der Vorderseite (27) der Hülse (17) eingerichtet ist, wobei die Dichtung (37) an der elektronischen Schaltung (25) anliegt und diese mindestens teilweise bedeckt.

3. Messrechen nach Anspruch 2,
**dadurch gekennzeichnet, dass** die Dichtung (37) mindestens eine Durchtrittsöffnung (40) gegenüber mindestens einem Sensor (29) der elektronischen Schaltung (25) umfasst, wobei jede der Öffnungen (40) zwischen der elektronischen Schaltung (25) und der Innenseite (32) der aufgesetzten Vorderkante (31) einen Hohlraum bildet, der gegenüber einem anderen Hohlraum hermetisch abgedichtet ist, wobei jeder Hohlraum mindestens einen Sensor (29) beinhaltet, wobei jeder Lufteinlass (34) der aufgesetzten Vorderkante (31) ausschließlich mit einem Hohlraum kommuniziert.

4. Messrechen nach einem der Ansprüche 1 bis 3, **dadurch gekennzeichnet, dass** die aufgesetzte Vorderkante (31) mindestens einen Messaufsatz (41) umfasst, der an der Außenseite (33) der aufgesetzten Vorderkante (31) in der Verlängerung jedes Lufteinlasses (34) eingerichtet ist, wobei jeder Messaufsatz (41) eine zylindrische Form aufweist, die dazu fähig ist, einen Luftstrom, der auf die Außenseite (33) auftrifft, in seinen jeweiligen Lufteinlass (34) zu leiten.

5. Messrechen nach Anspruch 4,
**dadurch gekennzeichnet, dass** die aufgesetzte Vorderkante (31) an der Außenseite (33) mindestens eine Gewindebohrung (43) umfasst, durch die hindurch mindestens ein Lufteinlass (34) mündet, wobei jeder Messaufsatz (41) einem aufgesetzten Teil entspricht, das in eine Gewindebohrung (43) geschraubt ist.

6. Messrechen nach einem der Ansprüche 1 bis 5,
**dadurch gekennzeichnet, dass** er mindestens ein Befestigungselement zum Befestigen der aufgesetzten Vorderkante (31) an der Hülse (17) umfasst.

7. Messrechen nach Anspruch 6,
**dadurch gekennzeichnet, dass** er ferner mindestens eine Gegendruckplatte (46) umfasst, die an einer Rückseite (48) der Hülse (17), die zu der Vorderseite (27) entgegengesetzt ist, eingerichtet ist, wobei die Gegendruckplatte (46) über ihre Länge über eine Vielzahl von Durchgangsbohrungen (51) verfügt, die den Durchgang der Befestigungselemente von dem Inneren der Hülse (17) aus gestatten, wobei die Befestigungselemente mindestens durch die Gegendruckplatte (46), die Hülse (17), die Dichtung (37) und die elektronische Schaltung (25) hindurchgehen, um die aufgesetzte Vorderkante (31) zu erreichen und so die aufgesetzte Vorderkante (31) an der Hülse (17) zu befestigen.

8. Messrechen nach einem der vorhergehenden Ansprüche, **dadurch gekennzeichnet, dass** er mindestens eine Datenverarbeitungseinheit (30) umfasst, die dazu fähig ist, durch die Sensoren (29) der elektronischen Schaltung (25) gemessene Daten zu empfangen, wobei die Datenverarbeitungseinheit (30) in die Hülse (17) integriert oder von ihr entfernt ist.

9. Motor eines Luftfahrzeugs, wobei der Motor (2) einen Sekundärstromkanal (6) und mindestens eine bewegliche Umkehrklappe (10) umfasst, wobei die Umkehrklappe (10) mindestens eine Stange (12) beinhaltet, die schwenkbar zwischen der Umkehrklappe (10) und einem Antrieb (8) befestigt ist, wobei die Stange (12) dazu konfiguriert ist, das Führen der Umkehrklappe (10) in eine eingefahrene Stellung, in der sie nicht quer zu dem Sekundärstromkanal (6) liegt, und eine ausgefahrene Stellung, in der sie quer zu dem Sekundärstromkanal (6) liegt, zu gestatten,
**dadurch gekennzeichnet, dass** er mindestens einen Messrechen (1) nach einem der Ansprüche 1 bis 8 umfasst, der an mindestens einer Stange (12) des Motors (2) eingerichtet ist, wobei die eine oder die mehreren Stangen (12) jeweils in der Aufnahme (19) mindestens eines Messrechens (1) aufgenommen sind.

10. Luftfahrzeug,
**dadurch gekennzeichnet, dass** es mindestens einen Motor (2) nach Anspruch 9 umfasst.

## Claims

1. Measuring rake intended for arrangement on a link rod (12), said measuring rake comprising at least:
- a sheath (17) comprising a front face (27) and two side walls (18A, 18B) which between them delimit a recess (19) intended for receiving the link rod (12);
- an electronic circuit (25) arranged on the front face (27) of the sheath (17) and comprising at least one sensor (29); and
- a patched leading edge (31) fixed removably to the sheath (17), said patched leading edge (31) comprising an inner face (32) arranged on the front face (27) of the sheath (17) so as to cover the electronic circuit (25), an outer face (33) situated opposite said inner face (32), and a plurality of air intakes (34) distributed over a length of the patched leading edge (31), each of said air intakes (34) forming a fluidic passage between the outer face (33) and the inner face (32) of the patched leading edge (31) opening out onto the electronic circuit (25) via said inner face (32), facing at least one sensor (29) of the electronic circuit (25).

2. Measuring rake according to Claim 1,
**characterized in that** it additionally comprises at least one seal (37) arranged removably between the inner face (32) of the patched leading edge (31) and the front face (27) of the sheath (17), said seal (37) being pressed against the electronic circuit (25) while at least partially covering it.

3. Measuring rake according to Claim 2,
**characterized in that** the seal (37) has at least one through-opening (40) facing at least one sensor (29) of the electronic circuit (25), each of said openings (40) forming, between the electronic circuit (25) and the inner face (32) of the patched leading edge (31), a cavity hermetically isolated from another cavity, each cavity comprising at least one sensor (29), each air intake (34) of the patched leading edge (31) communicating exclusively with one cavity.

4. Measuring rake according to any one of Claims 1 to 3, **characterized in that** the patched leading edge (31) comprises at least one measurement fitting (41) arranged on the outer face (33) of said patched leading edge (31) in the continuation of each air intake (34), each measurement fitting (41) having a cylindrical shape able to channel a flow of air incident on said outer face (33) into its respective air intake (34).

5. Measuring rake according to Claim 4,
**characterized in that** the patched leading edge (31) comprises, on the outer face (33), at least one tapped hole (43) by way of which at least one air intake (34) opens out, each measurement fitting (41) corresponding to a fitted part screwed in a tapped hole (43).

6. Measuring rake according to any one of Claims 1 to 5,
**characterized in that** it comprises at least one fixing element for fixing the patched leading edge (31) to the sheath (17).

7. Measuring rake according to Claim 6,
**characterized in that** it additionally comprises at least one counter-plate (46) arranged on a rear face (48) of the sheath (17) situated opposite the front face (27), said counter-plate (46) being provided, over its length, with a plurality of through-holes (51) for the passage of the fixing elements from the inside of the sheath (17), said fixing elements passing through at least the counter-plate (46), the sheath (17), the seal (37) and the electronic circuit (25) to reach the patched leading edge (31) so as to fix said patched leading edge (31) to the sheath (17).

8. Measuring rake according to any one of the preceding claims,
**characterized in that** it comprises at least one data processing unit (30) able to receive data measured by the sensors (29) of the electronic circuit (25), said data processing unit (30) being integrated in the sheath (17) or separate.

9. Engine for an aircraft, said engine (2) comprising a secondary duct (6) and at least one movable reverser door (10), said reverser door (10) comprising at least one link rod (12) fixed in articulated fashion between the reverser door (10) and a motor (8), said link rod (12) being configured to make it possible to bring the reverser door (10) into a retracted position, in which it is not across the secondary duct (6), and into a deployed position, in which it is across the secondary duct (6),
**characterized in that** it comprises at least one measuring rake (1) according to any one of Claims 1 to 8, arranged on at least one link rod (12) of the engine (2), said one or more link rods (12) each being accommodated in the recess (19) of at least one measuring rake (1).

10. Aircraft,
**characterized in that** it comprises at least one engine (2) according to Claim 9.
